## Europäisches Patentamt
## European Patent Office
## Office européen des brevets

(19)

(11) Veröffentlichungsnummer: **0 205 395**
**B1**

(12) **EUROPÄISCHE PATENTSCHRIFT**

(45) Veröffentlichungstag der Patentschrift:
26.09.90

(51) Int. Cl.5: **B05D 7/14**, B29C 47/02
// B29L23:22, B29K33:00

(21) Anmeldenummer: 86730037.8

(22) Anmeldetag: 04.03.86

(54) Verfahren zum Ummanteln von Stahlrohren mit einer Mantelschicht aus Polyäthylen.

(30) Priorität: 11.06.85 DE 3521308

(43) Veröffentlichungstag der Anmeldung:
17.12.86 Patentblatt 86/51

(45) Bekanntmachung des Hinweises auf die Patenterteilung:
26.09.90 Patentblatt 90/39

(84) Benannte Vertragsstaaten:
AT BE CH DE FR LI NL

(56) Entgegenhaltungen:
DE-A- 3 047 429
DE-A- 3 422 920
FR-A- 1 357 892
FR-A- 1 385 142

(73) Patentinhaber: MANNESMANN Aktiengesellschaft,
Mannesmannufer 2, D-4000 Düsseldorf 1(DE)

(72) Erfinder: Stucke, Walter, Portmannweg 8,
D-4030 Ratingen(DE)

(74) Vertreter: Meissner, Peter E., Dipl.-Ing. et al,
Patentanwaltsbüro Meissner & Meissner,
Herbertstrasse 22, D-1000 Berlin 33(DE)

**Beschreibung**

Die Erfindung betrifft ein Verfahren zum Ummanteln von Stahlrohren mit einer Mantelschicht aus Polyäthylen gemäß dem Oberbegriff des Patentanspruchs 1.

Ein solches Verfahren ist aus der DE-PS 30 47 429 bekannt. Um das spätere Verschweißen der Stahlrohre zu erleichtern, werden üblicherweise die Rohrenden nach dem Durchlaufen der Kühlstrecke auf einer Länge von etwa 150 mm von der äußeren Polyäthylen-Mantelschicht (PE) durch Abschälen, Abbürsten, Abschleifen oder ähnliche Verfahren befreit. Beispielsweise für das Abschälen wird die Ummantelung vorher im entsprechenden Abstand vom Rohrende ringförmig eingeschnitten. Dieser Schnitt verletzt ebenso wie andere Verfahren zum Entfernen der PE-Schicht in der Regel auch die Grundschicht aus Epoxyharz, die beim Abschälen nicht mit entfernt wird, sondern weiterhin fest auf dem Rohr haftet. Trotz des Durchschneidens der Epoxyharz-Schicht tritt auch bei der Lagerung derartiger Rohre im Freien in der Regel keine Korrosion an den Rohrenden auf, die zum einen durch eine übergeschobene Rohrverschlußkappe (in der Regel aus Polyamid) geschützt sind. Der zylinderförmige Mantel einer solchen Rohrverschlußkappe überdeckt normalerweise nicht den gesamten abgeschälten Teil des Rohrendes.

Unter extremen Witterungseinflüssen, d.h. insbesondere bei Frosteinwirkung mit Temperaturen unterhalb - 25°C kann es bei derartigen Stahlrohren nach einer Lagerung von mindestens acht Monaten Dauer im Freien zu Unterrostungen der Ummantelung kommen. Als Ursache hierfür sind Spannungen in der termoplastischen Mantelschicht anzusehen, die auf die Grundschicht übertragen werden und sich um so stärker auswirken, je dicker die äußere PE-Schicht ausgebildet ist und je höher das Molekulargewicht des verwendeten Kunststoffs (z.B. MDPE oder HDPE) ist.

Aufgabe der Erfindung ist es, ein gattungsgemäßes Verfahren zum Ummanteln von Stahlrohren dahingehend zu verbessern, daß derartige Unterrostungen auch bei längerer Lagerung der Rohre unter extremen Witterungsbedingungen sicher vermieden werden.

Gelöst wird diese Aufgabe durch ein Verfahren mit den Merkmalen des Patentanspruchs 1. Vorteilhafte Weiterbildungen dieses Verfahrens sind in den Unteransprüchen 2 bis 10 angegeben.

Zur Lösung der gestellten Aufgabe hätten auch Maßnahmen herangezogen werden können, die sich unmittelbar in einer Verminderung der auftretenden Spannungen in der Ummantelung ausgewirkt hätten. Hierzu können als Möglichkeiten angeführt werden eine wesentlich langsamere Ummantelungs- und Abkühlgeschwindigkeit, eine erhebliche Verdickung der Epoxyharz-Grundschicht und/oder der Äthylencopolymerisat-Kleberschicht, einer Reduzierung der Dicke der äusseren PE-Schicht oder die Wahl eines PE mit geringerem Molekulargewicht für die äußere Mantelschicht. Diese theoretischen Alternativen führen aber entweder zu einer wesentlichen Erhöhung der Verfahrenskosten oder sind von vornherein ausgeschlossen durch entsprechende Norm- und Kundenvorschriften (z.B. Ummantelungsmaterial, Mantelschichtdicke).

Die besondere Schwierigkeit bei der Auffindung der erfindungsgemäßen Lösung lag zum einen darin, Maßnahmen anzugeben, die sich ohne großen Aufwand in ein gattungsgemäßes Ummantelungsverfahren integrieren lassen, zum anderen mußte für die vorgeschlagene Versiegelung der Rohrenden ein Stoff angegeben werden, der neben guten Verarbeitungsmöglichkeiten auch eine gute Haftung auf drei verschiedenen Untergründen (äußere PE-Schicht, Epoxyharz-Schicht, Rohrverschlußkappe) gewährleistete und darüber hinaus keine negativen Auswirkungen bei der Nachisolierung der Verbindungsstelle zusammengeschweißter Rohre mit sich brachte. Das erfindungsgemäße Stoffgemisch erfüllt diese Anforderungen, da es nicht nur mit dem bei der Ummantelung verwendeten Kleber (Äthylencopolymerisat) und dem äußeren Ummantelungswerkstoff artverwandt ist, sondern gleichzeitig auch noch bei Temperaturen gut verarbeitungsfähig (zähflüssig, streichfähig) ist, die deutlich unter der Verarbeitungstemperatur der äußeren PE-Schicht (ca. 170°C) liegen. Somit wird die aufgetragene PE-Ummantelung nicht geschädigt. Darüber hinaus ist das Stoffgemisch so flüssig, daß zu seiner Verarbeitung keine hohen Drücke (z.B. Extrudieren) erforderlich sind, also der maschinelle Aufwand gering bleiben kann. Dennoch gewährleistet es auch eine staubtrockene Oberfläche bei normalen Lagerungstemperaturen.

Je nach der vorgesehenen Art der Auftragung und den dabei eingestellten Temperaturen eignen sich unterschiedlich zusammengesetzte Stoffgemische. Gegenüber dem Stoffgemisch gemäß Anspruch 6 ist das Stoffgemisch gemäß Anspruch 7 bei gleicher Temperatur deutlich dünnflüßiger, während das Stoffgemisch gemäß Anspruch 8 vergleichsweise zäh ist.

Anhand des nachfolgenden Ausführungsbeispiels wird das Verfahren näher beschrieben.

Mit Stahldrahtkorn an der äußeren Oberfläche gereinigte Stahlrohre von 150 mm Durchmesser werden durch Rohrverschlußkappen aus Polyamid, die als Kupplungskappen ausgebildet sind zu einem endlosen Rohrstrang zusammengefügt und auf mehr als 100°C erwärmt. Die Oberfläche der Stahlrohre wird in einer Dicke von ca. 50 µm mit einem Epoxyharz-Härter-Gemisch beschichtet. Zur Beschleunigung der Aushärtung werden die Rohre anschließend induktiv auf ca. 200°C erwärmt. Danach wird der Rohrstrang durch einen Zweikanal-Extruderkopf geführt, in dem auf die Epoxyharz-Grundschicht eine schlauchförmige Doppelfolie aus einer inneren Äthylencopolymerisat-Schicht von 150 µm Dicke und einer äußeren HDPE-Schicht von 2,0 mm Dicke aufgetragen wird. Das Äthylencopolymerisat-Granulat, welches Acrylsäure und Acrylsäureester enthält, wurde vor der Beschickung des zur Verarbeitung benötigten Extruders bei einer Temperatur von 70°C über eine Dauer von einer Stunde vorgetrocknet. Die Verarbeitungspemperaturen des Äthylencopolymerisates und des HDPE liegen bei 170°C. Nach dem Verlassen des Extruderkopfes läuft der ummantelte Rohrstrang in eine Kühlstrecke ein. Die Kühlung ist so bemessen, daß die Stahlrohre nach dem Verlassen der Kühlstrecke eine mittlere Temperatur von 70°C aufweisen.

Die Stahlrohre werden an den Verbindungsstellen, d.h. an den Kupplungskappen voneinander getrennt, indem die Mantelschicht durchschnitten wird. Danach wird in einem Abstand von 150 mm vom Rohrende jeweils ein ringförmiger Schnitt durch die Ummantelung geführt und die Beschichtung in diesem Bereich abgeschält. Dabei bleibt die Epoxyharz-Grundschicht auf dem Stahlrohr haften. Die Rohrenden, die noch eine Temperatur über 50°C aufweisen, werden anschließend in eine zusätzliche Beschichtungsstation eingeführt, in der auf einer Länge von etwa 160 mm vom Rohrende eine ca. 60 µm dicke Versiegelungsschicht aufgetragen wird. Die Schichtdicke der Versiegelung sollte mindestens 25 µm betragen und nach oben hin auf 150 µm begrenzt werden, da dickere Schichten (insbesondere ab 200 µm) für die Haftung der späteren Nachisolierung von Nachteil sind. Die Versiegelungsmasse, die bei einer Temperatur von 120°C verarbeitet wird, besteht aus 10% vorgetrocknetem Äthylencopolymerisat, 30 % Polyisobutylen mit dem Molgewicht von 10.000, 30 % Polypropylen, 10 % LDPE und 20 % Hartparaffin 68/72. Nach der Versiegelung kühlen die Stahlrohre auf Raumtemperatur ab. Es ist Vorsorge getroffen, daß die Belüftungslöcher in den Rohrverschlußkappen durch die Versiegelung nicht verschlossen werden.

## Patentansprüche

1. Verfahren zum Ummanteln von Stahlrohren mit einer Mantelschicht aus mittel- oder hochdichtem Polyäthylen, und mit einer aus einem Äthylencopolymerisat bestehenden Haftkleberschicht, wobei auf die mindestens 100°C warmen zu einem endlosen Rohrstrang zusammengefügten Stahlrohre zunächst eine Grundschicht aus einem heißhärtenden Epoxyharz aufgetragen wird, die Mantelschicht als schlauchförmige Folie mit einem Ringschlitz-Extruderkopf gleichzeitig auf den durch den Extruderkopf bewegten, auf Verarbeitungstemperatur erwärmten Stahlrohrstrang aufgebracht wird, die ummantelten Stahlrohre eine Kühlstrecke durchlaufen, die Stahlrohre danach wieder voneinander getrennt werden und die thermoplastische Ummantelung an den Rohrenden auf einer festgelegten Länge durch ringförmiges Einschneiden der Ummantelung und anschließendes Abschälen oder durch Abbürsten, Abschleifen oder ähnliches wieder entfernt wird, dadurch gekennzeichnet, daß der Rohrstrang in der Kühlstrecke auf eine mittlere Temperatur oberhalb 35°C abgekühlt wird und die von der Polyäthylen-Schicht befreiten Rohrenden mindestens im Bereich der auslaufenden Polyäthylen-Schicht bei dieser Temperatur mit einer mindestens 25 µm und höchstens 150 µm dicken Schicht aus einem unterhalb der Verarbeitungstemperatur der Polyäthylen-Schicht streichfähigem oder zähflüssigem Stoffgemisch aus (Gew.-%)
10–50% Acrylsäure und Acrylsäureester enthaltendem vorgetrocknetem Äthylencopolymerisat, 20–35% Polyisobutylen mit einem Molekulargewicht unter 20.000,
10–20% niedermolekularem Polyäthylen (LDPE),
10 - 25 % Hartparaffin und
bis zu 30% Polypropylen
versiegelt werden, wobei diese Versiegelung die Polyäthylen-Mantelschicht überlappt.

2. Verfahren nach Anspruch 1,
dadurch gekennzeichnet,
daß das Auftragen der Versiegelung mittels Rakeln, Pinseln oder Bürsten erfolgt.

3. Verfahren nach Anspruch 1,
dadurch gekennzeichnet,
daß das Auftragen der Versiegelung durch Benetzen der Rohrenden im Überschuß und anschließendes Abstreifen des überschüssigen Materials an Abstreifmanschetten erfolgt.

4. Verfahren nach Anspruch 1,
dadurch gekennzeichnet,
daß das Auftragen der Versiegelung durch Eintauchen der Rohrenden in die flüssige Versiegelungsmasse erfolgt.

5. Verfahren nach einem der Ansprüche 1 bis 4,
dadurch gekennzeichnet,
das die Abkühlung vor der Versiegelung bis auf eine Temperatur von höchstens 70°C erfolgt.

6. Verfahren nach einem der Ansprüche 1 bis 5,
dadurch gekennzeichnet,
daß eine Versiegelungsmasse aus
10 % Äthylencopolymerisat,
30 % Polyisobutylen mit einem Molgewicht von 10.000,
30 % Polypropylen,
10 % niedermolekularem Polyäthylen (LDPE),
20 % Hartparaffin 68/72
verwendet wird.

7. Verfahren nach einem der Ansprüche 1 bis 5,
dadurch gekennzeichnet,
daß eine Versiegelungsmasse aus
20 % Äthylencopolymerisat,
35 % Polyisobutylen mit einem Molgewicht von 15.000,
20 % niedermolekularem Polyäthylen (LDPE),
25 % Hartparaffin 68/72
verwendet wird.

8. Verfahren nach einem der Ansprüche 1 bis 5,
dadurch gekennzeichnet,
daß eine Versiegelungsmasse aus
50 % Äthylencopolymerisat,
10 % Polyisobutylen mit einem Molgewicht von 10.000,
10 % Polyisobutylen mit einem Molgewicht von 15.000,
10 % Polypropylen,
10 % niedermolekularem Polyäthylen (LDPE),
10 % Hartparaffin 68/72
verwendet wird.

9. Verfahren nach einem der Ansprüche 1 bis 8,
dadurch gekennzeichnet,
daß die Versiegelungsmasse vor dem Auftragen auf eine Temperatur von 120 - 150°C erwärmt wird.

10. Verfahren nach einem der Ansprüche 1 bis 9,
dadurch gekennzeichnet,
daß auf die Rohrenden Rohrverschlußkappen aufgeschoben werden und die Versiegelung so ausgeführt wird, daß die Rohrverschlußkappen von der Versiegelung überlappt werden.

## Claims

1. Process for covering steel pipes with a covering layer of medium or high density polyethylen, and with a contact adhesive layer consisting of an ethylene copolymer, with a base layer of a heat-hardening epoxy resin first being applied to the steel pipes which are at a temperature of at least 100°C and have been combined fo form an endless pipe string, the covering layer simultaneously applied to the string of steel pipes which is moved through the extruder head and heated to treatment temperature as a tubular film by means of an annular slot extruder head, the covered steel pipes passing through a cooling section, the steel pipes then being separated from each other again and the thermoplastic sheath at the pipe ends being removed again to a set length by cutting into the sheath in a ring shape and subsequent peeling or by brushing off, grinding off or the like, characterised in that the string of pipes is cooled in the cooling section to an average temperature of above 35°C and the pipe ends which are freed of the polyethylene layer are sealed at least in the region of the emerging polyethylene layer at this temperature with a layer at least 25 μm and at most 150 μm thick of a substance mixture which is brushable or viscous below the processing temperature of the polyethylene layer and consists of (% by weight)
10–50% pre-dried ethylene copolymer containing acrylic acid and acrylate,
20–35% polyisobutylene having a molecular weight of below 20,000,
10–20% low-molecular polyethylene (LDPE),
10–25% hard paraffin and
up to 30% polypropylene,
with this seal overlapping the polyethylene covering layer.

2. Process according to Claim 1, characterised in that the application of the seal takes place by means of doctor blades, paintbrushes or brushes.

3. Process according to Calim 1, characterised in that the application of the seal takes place by wetting the pipe ends in excess and subsequent scraping off of the excess material on scraper collars.

4. Process according to Claim 1, characterised in that the application of the seal takes place by dipping the pipe ends into the liquid sealing substance.

5. Process according to one of Claims 1 to 4, characterised in that the cooling before sealing takes place up to a temperature of at most 70°C.

6. Process according to one of Claims 1 to 5, characterised in that a sealing substance of
10% ethylene copolymer,
30% polyisobutylene with a molar weight of 10,000,
30% polypropylene,
10% low-molecular polyethylene (LDPE),
20% hard paraffin 68/72
is used.

7. Process according to one of Claims 1 to 5, characterised in that a sealing substance of
20% ethylene copolymer,
35% polyisobutylene with a molar weight of 15,000,
20% low-molecular polyethylene (LDPE),
25% hard paraffin 68/72
is used.

8. Process according to one of Claims 1 to 5, characterised in that a sealing substance of
50% ethylene copolymer,
10% polyisobutylene with a molar weight of 10,000,
10% polyisobutylene with a molar weight of 15,000,
10% polypropylene,
10% low-molecular polyethylene (LDPE),
10% hard paraffin 68/72
is used.

9. Process according to one of Claims 1 to 8, characterised in that the sealing substance is heated to a temperature of 120–150°C before application.

10. Process according to one of Claims 1 to 9, characterised in that pipe closing caps are pushed onto the pipe ends and the sealing is performed in such a manner that the pipe closing caps are overlapped by the seal.

## Revendications

1. Procédé pour enrober de tubes d'acier d'une couche de polyéthylène de densité moyenne ou élevée et d'une couche de colle constituée d'un copolymère d'éthylène, dans lequel, tout d'abord, une couche de base en une résine époxy thermodurcissable est appliquée sur les tubes d'acier, réunis en un assemblage de tubes sans fin, chauffés à au moins 100°C, la couche d'enrobage, sous forme de feuille en forme de tuyau, est appliquée avec une tête d'extrusion à fente annulaire, en même temps, sur l'assemblage de tubes d'acier réchauffé à la température de traitement et qui se déplace à travers la tête d'extrusion, les tubes d'acier enrobés traversent un parcours de refroidissement, les tubes d'acier sont, ensuite, à nouveau séparés l'un de l'autre et l'enrobage thermoplastique aux extrémités du tube est à nouveau éliminé sur une longueur déterminée par découpe annulaire de l'enrobage et pelage ultérieur, ou par brossage, meulage ou analogue, caractérisé en ce que l'assemblage de tubes est refroidi dans le parcours de refroidissement à une température moyenne au-dessus de 35°C, et les extrémités de tube débarrassées de la couche de polyéthylène, au moins dans la zone de la couche de polyéthylène éliminée sont protégées ou vernies, à cette température, par une couche ayant une épaisseur d'au moins 25 μm et d'au plus 150 μm d'un mélange de matières, visqueux ou pouvant être appliqué au-dessous de la température de traitement de la couche de polyéthylène, constitué de (% pondéral):
– 10–50% de copolymère d'éthylène préséché contenant de l'acide acrylique et de l'acrylate,
– 20–35% de polyisobutylène ayant un poids moléculaire au-dessous de 20 000,
– 10–20% de polyéthylène de basse densité,
– 10–25% de paraffine dure, e
– jusqu'à 30% de polypropylène,
cette protection ou ce vernis chevauchant la couche d'enrobage de polyéthylène.

2. Procédé selon la revendication 1, caractérisé en ce que l'application du vernis est réalisée au moyen de racles, pinceaux ou brosses.

3. Procédé selon la revendication 1, caractérisé en ce que l'application du vernis a lieu par mouillage des extrémités du tube en excès et raclage ultérieur de la matière en excès sur des manchons de raclage.

4. Procédé selon la revendication 1, caractérisé en ce que l'application du vernis a lieu par immersion des extrémités du tube dans la masse de vernis liquide.

5. Procédé selon une des revendications 1 à 4, caractérisé en ce que le refroidissement avant le vernissage a lieu jusqu'à une température d'au plus 70°C.

6. Procédé selon une des revendications 1 à 5, caractérisé en ce qu'on utilise une masse de vernis constituée de:
- 10% de copolymère d'éthylène,
- 30% de polyisobutylène ayant un poids molaire de 10 000,
- 30% de polypropylène,
- 10% de polyéthylène de basse densité,
- 20% de paraffine dure 68/72.

7. Procédé selon une des revendications 1 à 5, caractérisé en ce qu'on utilise une masse de vernis constituée de:
- 20% de copolymère d'éthylène,
- 35% de polyisobutylène ayant un poids molaire de 15 000,
- 20% de polyéthylène de basse densité,
- 25% de paraffine dure 68/72.

8. Procédé selon une des revendications 1 à 5, caractérisé en ce qu'on utilise une masse de vernis, constituée de:
- 50% de copolymère d'éthylène,
- 10% de polyisobutylène ayant un poids molaire de 10 000,
- 10% de polyisobutylène ayant un poids molaire de 15 000,
- 10% de polypropylène,
- 10% de polyéthylène de basse densité,
- 10% de paraffine dure 68/72.

9. Procédé selon une des revendications 1 à 8, caractérisé en ce que la masse de vernis, avant l'application, est chauffée à une température de 120–150°C.

10. Procédé selon une des revendications 1 à 9, caractérisé en ce que des capuchons de fermeture des tubes sont disposés sur les extrémités des tubes, et le vernissage est réalisé de sorte que les capuchons de fermeture des tubes sont recouverts par le vernis.